Europäisches Patentamt

European Patent Office

Office européen des brevets

(11) Veröffentlichungsnummer : **0 437 748 B1**

(12) **EUROPÄISCHE PATENTSCHRIFT**

(45) Veröffentlichungstag der Patentschrift :
31.08.94 Patentblatt 94/35

(21) Anmeldenummer : 90124258.6

(22) Anmeldetag : 14.12.90

(51) Int. Cl.⁵ : **H02H 7/16**

(54) **Verfahren zur überwachung von Kondensatoranlagen.**

(30) Priorität : **17.01.90 DE 4001190**

(43) Veröffentlichungstag der Anmeldung :
**24.07.91 Patentblatt 91/30**

(45) Bekanntmachung des Hinweises auf die
Patenterteilung :
**31.08.94 Patentblatt 94/35**

(84) Benannte Vertragsstaaten :
**CH DE ES FR IT LI**

(56) Entgegenhaltungen :
**DE-A- 2 903 319**
**DE-B- 1 197 176**
**IEEE TRANSACTIONS ON POWER DELIVERY.**
**vol. 4, no. 1, Januar 1989, NEW YORK US**
**Seiten 241 - 247; N.D.Sadanandan et.al.:**
**"Microprocessor based capacitor bankcontrol**
**and protection system"**
**ASEA-Zeitschrift vol. 20, no. 2, 1975, Väste-**
**ras,SE Seite 45 "Optoelektronische Schutz-**
**einrichtung für Serienkondensatoren"**

(73) Patentinhaber : **Roederstein Spezialfabriken**
**für Bauelemente der Elektronik und**
**Kondensatoren der Starkstromtechnik GmbH**
**Ludmillastrasse 23/25**
**D-84034 Landshut (DE)**

(72) Erfinder : **Huber, Robert**
**Max-Reger-Strasse 3**
**W-8303 Rottenburg (DE)**
Erfinder : **Hauke, Ottmar**
**Florastrasse 25**
**W-8300 Landshut (DE)**

(74) Vertreter : **Dipl.-Phys.Dr. Manitz Dipl.-Ing.**
**Finsterwald Dipl.-Ing. Grämkow Dipl.Chem.Dr.**
**Heyn Dipl.Phys. Rotermund Morgan,**
**B.Sc.(Phys.)**
**Postfach 22 16 11**
**D-80506 München (DE)**

## Beschreibung

Die Erfindung betrifft ein Verfahren zur Überwachung von Kondensatoranlagen in Brücken- oder Doppelsternschaltung, bei dem mittels eines im Brückenzweig oder zwischen Doppelsternpunkten angeordneten Wandlers eine Wickelabschaltung, eine Unterbrechung oder ein Gruppenkurzschluß in Abhängigkeit von der Überschreitung eines vorgebbaren Toleranzbereichs durch das Unsymmetrie-Meßsignal ermittelt, signalisiert und/oder in ein Abschaltsignal umgesetzt wird.

Verfahren dieser Art und auch Vorrichtungen zur Realisierung dieses Verfahrens sind bekannt und zur Überwachung und zum Schutz von Kondensatoranlagen im praktischen Einsatz. Sowohl bei in Brückenschaltung als auch bei in Doppelsternschaltung ausgeführten Kondensatorbatterien tritt selbst bei gezielter Auswahl der Einzelkondensatoren im Brückenzweig oder zwischen den Doppelsternpunkten stets ein gewißer Stromfluß auf, der seine Ursache in den Toleranzen der Einzelkondensatoren hat.

Dieser, von den Toleranzen der Einzelkondensatoren herrührende Strom wird bei Auftreten von Fehlern in der Kondensatoranlage vom Fehlerstrom überlagert. Um Fehlauslösungen zu vermeiden, muß im Hinblick auf den von den Toleranzen der Einzelkondensatoren herrührenden Strom ein Toleranzbereich vorgegeben werden, der einerseits im Hinblick auf die gewünschte Ansprechempfindlichkeit klein sein soll, andererseits aber auch so groß gewählt werden muß, daß die von den Toleranzen herrührenden Unsymmetrien nicht zu Fehlauslösungen führen.

Dabei kommt erschwerend hinzu, daß der im Brückenzweig oder zwischen Doppelsternpunkten fließende Strom unterschiedliche Richtung haben kann und deshalb der von den natürlichen Unsymmetrien herrührende Strom den tatsächlichen Fehlerstrom verkleinern oder vergrößern kann. Diesem Sachverhalt muß bei bekannten Verfahren durch entsprechende Wahl des Toleranzbereichs Rechnung getragen werden. Außerdem ist bei den bekannten Verfahren und den zu deren Realisierung vorgesehenen Geräten keine Möglichkeit gegeben, den Fehlerort unmittelbar bei Auftreten eines Fehlers zu lokalisieren.

Aufgabe der Erfindung ist es daher, daß Verfahren der eingangs angegebenen Art in der Weise zu verbessern, daß unter gleichzeitiger Ermöglichung der Bestimmung des Fehlerortes Unsymmetrie-Änderungen unter Berücksichtigung eventueller Stromrichtungswechsel im Brückenzweig bzw. zwischen Doppelsternpunkten exakt erfaßt und Auslösekriterien feinfühlig vorgegeben werden können.

Gelöst wird diese Aufgabe nach der Erfindung im wesentlichen dadurch, daß zusätzlich zu dem Unsymmetrie-Meßsignal ein auf eine Phase bezogenes Referenzsignal gebildet und das jeweilige Unsymmetrie-Meßsignal mit Hilfe des Referenzsignals zyklisch zumindest in phasenbezogene Einzel-Meßsignale zerlegt und der dem Einzel-Meßsignal entsprechende Teilstrom hinsichtlich Betrag und Richtung bestimmt und mit einem jeweils zugehörigen Einzel-Toleranzwert verglichen wird.

Durch diese Vorgehensweise wird es möglich, die absoluten Änderungen des Stromflußes pro Phase bzw. pro Zweig zu ermitteln, wobei im Falle einer Brückenschaltung die Phasenlage des jeweiligen Unsymmetriestroms der einzelnen Phasen zum Referenzstrom 0°, +120° und +240° beträgt und somit eine eindeutige Zuordnung des Unsymmetriestromes zur entsprechenden Brücke möglich ist, während die Doppelsternpunktschaltung einen Summenstrom liefert, der in Betrag und Phase aus der Addition der drei Unsymmetrieströme entstanden ist. Mit Hilfe des Referenzstromes ist es jedoch möglich, diesen Summenstrom in die einzelnen Teilströme zu zerlegen, da jede Änderung des Summenstroms nur phasengleich zum entsprechenden Leiterstrom erfolgen kann. Somit wird es möglich, die Fehlerphase und unter Berücksichtigung der Richtung der Stromänderung auch den jeweiligen Zweig zu ermitteln.

Nach einer zweckmäßigen Ausgestaltung des Verfahrens nach der Erfindung werden die von unterschiedlichen Kondensatorgrößen herrührenden natürlichen Unsymmetrie-Meßsignale phasenbezogen gespeichert und während eines jeden Meßzyklus zur Korrektur der phasenbezogenen Meßsignale verwendet. Dabei kann für alle phasenbezogenen Meßwerte ein gleicher Toleranzwert vorgegeben werden, aber vorzugsweise ist vorgesehen, daß bei dem Vergleich der Einzel-Meßsignale mit dem Toleranzwert zwischen einem einer Wickelabschaltung, einer Unterbrechung und einem einem Gruppenkurzschluß entsprechenden Fehler unterschieden wird, und zwar durch betrags- und zeitabhängige Beurteilung der Änderung des Unsymmetriestroms.

Wickelabschaltung und Gruppenkurzschluß unterscheiden sich hinsichtlich ihrer Auswirkungen dadurch, daß die Wickelabschaltung und eine Unterbrechung immer einen Kapazitätsverlust zur Folge hat, während der Gruppenkurzschluß zu einer Kapazitätszunahme führt. Zur Erkennung des Gruppenkurzschlußes wird davon ausgegangen, daß die durch diesen Gruppenkurzschluß verursachte Änderung des Unsymmetriestromes deutlich größer ist als im Falle einer Wickelabschaltung, so daß eine sprungartige Überschreitung eines vorgebbaren Auslösewertes als Kenngröße für einen Gruppenkurzschluß gewertet werden kann.

Eine weitere vorteilhafte Ausgestaltung der Erfindung besteht darin, daß die vorgebbaren Toleranz- bzw. Auslösewerte in Abhängigkeit von Schwankungen der Nennspannung der Kondensatoranlage verändert werden können. Die im Rahmen der Erfindung jeweils rechnerisch ermittelten Auslösewerte gelten nur bei Nenn-

EP 0 437 748 B1

spannung der Kondensatoranlage. Spannungsschwankungen und insbesondere eine verminderte Spannung würden eine korrekte Funktion einer nach der erfindungsgemäßen Verfahren arbeitenden Vorrichtung nicht mehr gewährleisten. Deshalb werden die Toleranz- bzw. die Auslösewerte in Abhängigkeit von der Nennspannung verändert, und zwar zweckmäßigerweise dadurch, daß die Auslösewerte jeweils mit dem Quotienten aus tatsächlichem Strom zum eingestellten Nennstrom multipliziert werden und die auf diese Weise errechneten Auslösewerte dann das jeweils aktuelle Kriterium für die Auslösung bilden.

Weitere vorteilhafte Ausgestaltungen des Verfahrens nach der Erfindung sind in Unteransprüchen angegeben.

Ausführungsbeispiele der Erfindung sind in der Zeichnung dargestellt; in der Zeichnung zeigt:

Fig. 1 ein schematisches Schaltbild einer Vorrichtung zur Durchführung des Verfahrens nach der Erfindung im Zusammenhang mit einer einphasigen Brückenschaltung,

Fig. 2 eine schematische Darstellung einer Vorrichtung zur Durchführung des Verfahrens nach der Erfindung im Zusammenhang mit einer dreiphasigen Brückenschaltung,

Fig. 3 eine schematische Darstellung einer Vorrichtung zur Durchführung des erfindungsgemäßen Verfahrens im Zusammenhang mit einer Doppelstern-Schaltung, und

Fig. 4 ein Blockschaltbild einer bevorzugten Ausführungsform einer erfindungsgemäßen Vorrichtung.

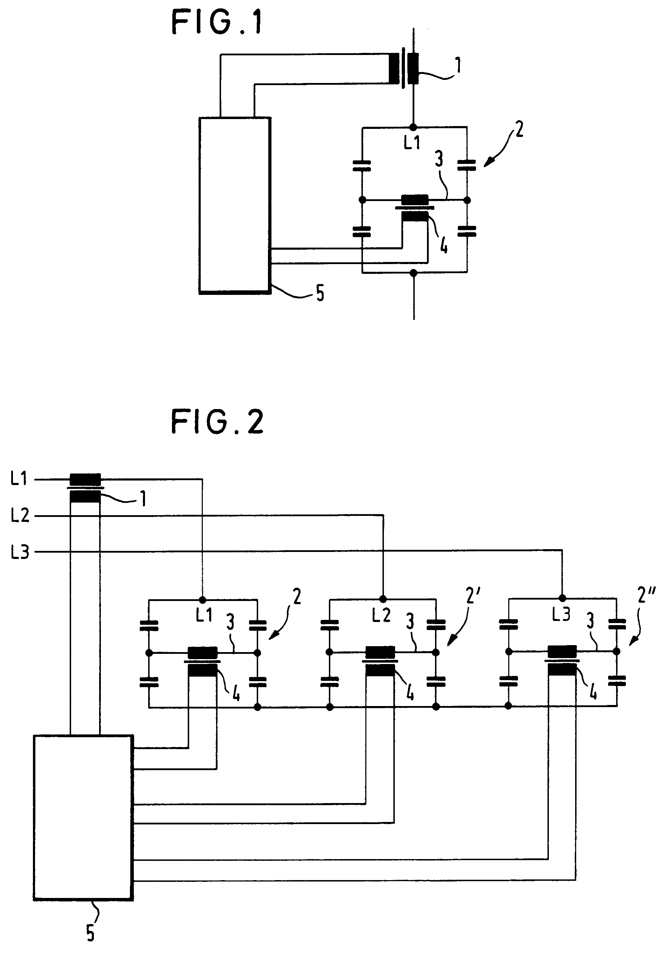

Das Prinzipschaltbild nach Fig. 1 zeigt eine der Phase L1 zugeordnete Brückenschaltung 2 von Kondensatoren, wobei im Brückenzweig 3 ein Unsymmetriewandler 4 angeordnet ist.

In die Phase L1 ist ferner ein Referenzwandler 1 eingeschaltet, dessen Ausgänge in gleicher Weise wie die Ausgänge des Unsymmetriewandlers 4 zu entsprechenden Eingängen eines Mikrocomputers 5 führen.

Diese Schaltungsanordnung, mittels der das erfindungsgemäße Verfahren realisierbar ist, ermöglicht es, Veränderungen der Unsymmetrie-Spannung nach folgenden Kriterien zu bewerten:

- Erfassung und Berechnung der Unsymmetrieänderungen unter Berücksichtigung eventueller Stromrichtungswechsel im Brückenzweig;
- Anpassung der Auslösewerte an Betriebsspannungsänderungen;
- Anzeige der Fehlerphase und des Fehlzweigs bei Überschreiten vorgebbarer Auslösewerte. Ferner kann in diesem Zusammenhang unterschieden werden zwischen einer Wickelabschaltung, einem Gruppenkurzschluß und einer Unterbrechung.

Der Referenzwandler 1 dient dabei zur Erzeugung eines Meßtriggersignals, aufgrund dessen die jeweils eine vorgebbare Dauer, beispielsweise eine Dauer von 100 ms besitzenden Meßzyklen gestartet werden. Im Rahmen eines Meßzyklus erfolgt die Erfassung aller Stromwerte und eingestellter Sollwerte, die Berechnung aller Unsymmetrie-Werte, die Steuerung einer vorgesehenen Anzeigeeinheit und gegebenenfalls eine Alarmauslösung.

Außerdem kann der Referenzwandler 1 dazu benutzt werden, eine Kondensatorstromgröße für die Berechnung der Auslösewerte zu liefern.

Die Phasenlagen der ermittelten Stromänderungen im Brückenzweig 3 dienen zugleich zur Ermittlung des jeweiligen Fehlerortes.

Um zu verhindern, daß im Rahmen der Signalauswertung beispielsweise Oberwellen oder von Transienten herrührende Störsignale negativen Auswirkungen haben, werden die gewonnen Meßsignale vorzugsweise über einen Bandpaßfilter, zum Beispiel einen 50 Hz- oder 60 Hz-Bandpaßfilter, geführt. Die jeweils erhaltenen Analog-Meßwerte werden dem Mikroprozessor 5 über Analog/Digitalwandler zugeführt, welche die Analoggrößen in eine 8-Bit-Information umsetzen. Die Auswertung der Informationen erfolgt im Mikroprozessor 5, und dieser steuert auch ein vorgesehenes Anzeigefeld.

Vorzugsweise werden zwei Auslösewerte vorgegeben, wobei ein erster Auslösewert einem Warnsignal und ein zweiter Auslösewert einem Alarm- oder Abschaltsignal zugeordnet wird.

Figur 2 zeigt eine Schaltungsanordnung in Form einer dreiphasigen Brückenschaltung, die vom Grundaufbau her der Schaltungsanordnung nach Figur 1 entspricht und ebenfalls einen Referenzwandler 1 in der Phase L1 aufweist, der mit einem Mikroprozessor 5 verbunden ist. Jeder der Phasen L1, L2 und L3 ist eine Brückenschaltung 2, 2', 2" zugeordnet, wobei in deren Brückenzweigen 3 jeweils ein Unsymmetriewandler 4 angeordnet ist, dessen Ausgänge zum Mikroprozessor 5 führen.

Da bei dieser Brückenschaltung die Phasenlage des Unsymmetriestromes in den einzelnen Brückenzweigen der Brückenschaltungen 2, 2', 2" bezüglich des Referenzsignals vom Referenzwandler 1 genau definiert ist, läßt sich eine eindeutige Zuordnung des Unsymmetriestromes zur entsprechenden Brücke erreichen.

Durch Wickelabschaltung oder Gruppenkurzschluß kann der Unsymmetriestrom betragsmäßig größer oder kleiner werden. Bei einer Verkleinerung besteht auch die Möglichkeit der Stromumkehr und eines erneuten Anstiegs des Unsymmetriestroms (Uss). Für die Berechnung der Unsymmetrie-Änderung ergeben sich dadurch folgende Varianten:

- kein Stromrichtungswechsel:

EP 0 437 748 B1

$$\text{Uss - Änderung} = |\text{natürlicher Uss} - \text{gemessener Uss}|$$
- mit Stromrichtungswechsel:
$$\text{Uss - Änderung} = |\text{natürlicher Uss} + \text{gemessener Uss}|$$

Mit der Schaltungsanordnung nach der Erfindung kann ein Stromrichtungswechsel erkannt und die absolute Unsymmetrie-Änderung berechnet werden. Die für eine Anzeige vorgesehenen Ist-Werte entsprechen dabei den momentanen, betragsmäßigen Unsymmetrieströmen. Die Soll-Werte Uss von L1, L2 und L3 zeigen die Änderungen des Unsymmetriestromes vom Zeitpunkt der Einstellung an.

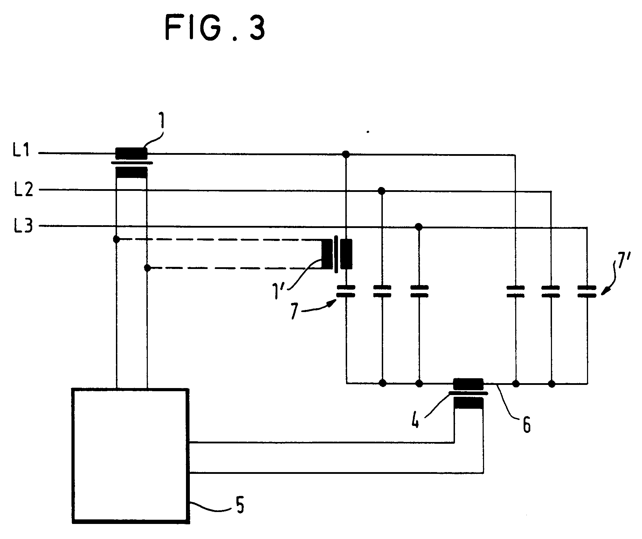

Figur 3 zeigte eine schematische Darstellung einer Schaltung in Form einer Doppelstern-Anordnung. Die beiden Sternschaltungen sind dabei mit den Bezugzeichen 7, 7' gekennzeichnet, und der Summenstrom zwischen diesen beiden Sternschaltungen in der Verbindungsleitung 6 wird mittels eines Unsymmetriewandlers 4 ermittelt, dessen Ausgänge mit einem Mikroprozessor 5 verbunden sind. In die Phase L1 ist wiederum ein Referenzstromwandler 1 eingeschaltet, dessen Ausgänge ebenfalls mit dem Mikroprozessor 5 verbunden sind. Alternativ kann der Referenzstromwandler auch in dem Zusammenhang mit dem Bezugszeichen 1' gekennzeichneten Weise in die der Sternschaltung 7 zugeordnete Phase L1 geschaltet werden.

Der den Unsymmetriewandler 4 durchfließende Summenstrom der Doppelsternpunktschaltung entsteht in Betrag und Phase aus der Addition der drei Unsymmetrieströme. Mit Hilfe des vom Wandler 1 erzeugten Referenzstromes ist es möglich, diesen Summenstrom in die einzelnen Teilströme zu zerlegen. Jede Änderung des Summenstroms kann nämlich nur phasengleich zum entsprechenden Leiterstrom erfolgen. Somit besteht die Möglichkeit, die Fehlerphase, und aufgrund der Richtung der Stromänderung, auch den jeweiligen Zweig zu ermitteln.

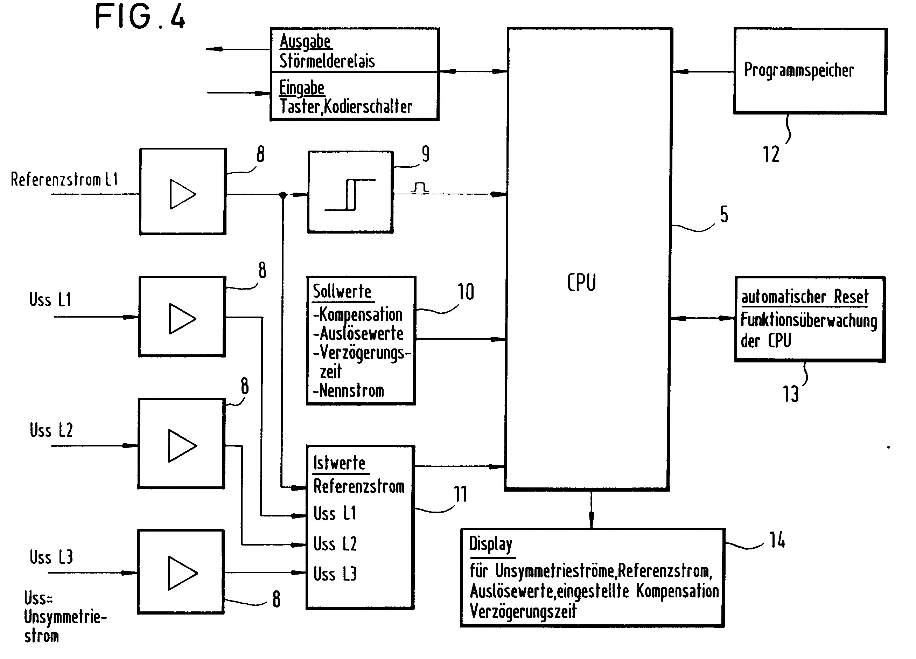

Figur 4 zeigt ein Blockschaltbild einer bevorzugten Ausführungsform einer Schaltungsanordnung zur Realisierung des erfindungsgemäßen Verfahrens.

Sowohl der Referenzstrom, der von der Phase L1 abgeleitet wird, als auch die den Phasen L1, L2 und L3 zugeordneten Unsymmetrieströme werden über Bandpaßfilter 8 geführt, um eventuelle Störeinflüsse auszuschalten.

Das dem Referenzstrom entsprechende Signal gelangt über einen Schmitt-Trigger 9 zum Mikroprozessor 5 und wird außerdem wird einem Analog/Digital-Wandler 11 zugeführt, der auch eine Umwandlung der den Phasen L1, L2, L3 zugeordneten Meßwerte in Digitalsignale gewährleistet, welche dann wiederum dem Mikroprozessor 5 zugeführt werden.

Dieser Mikroprozessor 5 erhält ferner von einem Ananlog/Digital-Wandler 10 die verschiedenen vorgebbaren Sollwerte. Ferner ist der Mikroprozessor 5 mit einem Programmspeicher 12 sowie mit einer Einheit 13 zur Funktionsüberwachung verbunden.

Die Ausgangsgrößen des Mikroprozessors 5 steuern ein Display 14, das geeignet ist, Unsymmetrieströme, Auslösewerte, den Referenzstrom, die eingestellte Kompensation sowie die gewünschte Verzögerungszeit anzuzeigen.

**Patentansprüche**

1. Verfahren zur Überwachung von Kondensatoranlagen in Brücken- oder Doppelsternschaltung, bei dem mittels eines im Brückenzweig oder zwischen Doppelsternpunkten angeordneten Wandlers eine Wickelabschaltung oder ein Gruppenkurzschluß in Abhängigkeit von der Überschreitung eines vorgebbaren Toleranzbereichs durch das Unsymmetrie-Meßsignal ermittelt, signalisiert und/oder in ein Abschaltsignal umgesetzt wird,
dadurch gegekennzeichnet,
daß zusätzlich zu dem Unsymmetrie-Meßsignal ein auf eine Phase bezogenes Referenzsignal gebildet und das jeweilige Unsymmetrie-Meßsignal mit Hilfe des Referenzsignals zyklisch zumindest in phasenbezogene Einzel-Meßsignale zerlegt und der dem Einzel-Meßsignal entsprechende Teilstrom hinsichtlich Betrag und Richtung bestimmt und mit einem jeweils zugehörigen Einzel-Toleranzwert verglichen wird.

2. Verfahren nach Anspruch 1,
dadurch gekennzeichnet,
daß das jeweilige Unsymmetrie-Meßsignal mit Hilfe des Referenzsignals zyklisch in phasen- und zweigbezogene Einzel-Meßsignale zerlegt wird.

3. Verfahren nach Anspruch 1 oder 2,
dadurch gekennzeichnet,
daß die von natürlichen Unsymmetrien aufgrund unterschiedlicher Kondensatorgrößen herrührenden An-

4

fangs-Meßwerte phasenbezogen gespeichert und während eines jeden Meßzyklus zur Korrektur der momentanen phasenbezogenen Meßsignale verwendet werden, und daß für alle phasenbezogenen Meßwerte der gleiche Toleranzwert vorgegeben wird.

4. Verfahren nach Anspruch 3,
dadurch gekennzeichnet,
daß die vorgebbaren Toleranzwerte bzw. Auslösewerte in Abhängigkeit von Schwankungen der Nennspannung der Kondensatoranlage verändert werden.

5. Verfahren nach Anspruch 4,
dadurch gekennzeichnet,
daß die Toleranzwerte bzw. Auslösewerte jeweils mit dem Quotienten aus tatsächlichem Strom zum eingestellten Nennstrom multipliziert werden.

6. Verfahren nach einem der vorhergehenden Ansprüche,
dadurch gekennzeichnet,
daß bei dem Vergleich der Einzel-Meßsignale zwischen einer Wickelabschaltung, einem Gruppenkurzschluß und einer internen Unterbrechung durch betrags- und zeitabhängige Beurteilung der Änderung des Unsymmetriestromes unterschieden wird.

7. Verfahren nach einem der vorhergehenden Ansprüche,
dadurch gekennzeichnet,
daß bei jedem Überschreiten des Toleranz- bzw. Auslösewertes die Phasenlage der Meßsignaländerung zum Referenzsignal bestimmt und dadurch der jeweilige Fehlerort ermittelt wird.

8. Verfahren nach Anspruch 6,
dadurch gekennzeichnet,
daß der einem Gruppenkurzschluß entsprechende Unsymmetrie-Meßwert in einem Spitzenwertspeicher abrufbar zwischengespeichert wird.

9. Verfahren nach einem der vorhergehenden Ansprüche,
dadurch gekennzeichnet,
daß das nach Toleranzwertüberschreitung gebildete Auslösesignal in vorgebbarer Weise zeitlich verzögert werden kann.

## Claims

1. Method for the monitoring of capacitor systems in a bridge circuit or double star circuit wherein a winding disconnection or a group short circuit is determined, is signalled, and/or is converted into a disconnection signal through the unbalanced measurement signal by means of a transducer arranged in the bridge branch or in between double star points in dependence on a predeterminable tolerance range being exceeded,
characterised in that
a reference signal related to the phase is formed in addition to the unbalanced measurement signal, and the respective unbalanced measurement signal is cyclically separated at least into phase-related individual measurement signals with the aid of the reference signal, and the partial current corresponding to the individual measurement signal is determined in magnitude and direction and compared to a respectively associated individual tolerance value.

2. Method according to claim 1,
characterised in that
the respective unbalanced measurement signal is cyclically separated into phase-related and branch-related individual measurement signals with the aid of the reference signal.

3. Method according to claim 1 or 2,
characterised in that
the initial measurement values due to natural asymmetries as a result of differing capacitor sizes are stored in a phase-related manner and used for the correction of the instantaneous phase-related measurement signals during each measurement cycle,
and in that
the same tolerance value is given for all phase-related measurement values.

4. Method according to claim 3,
characterised in that
the predeterminable tolerance values or triggering values are varied depending on fluctuations of the nominal voltage of the capacitor system.

5. Method according to claim 4,
characterised in that
the tolerance values or triggering values are multiplied by the quotient of the actual current and the selected nominal current.

6. Method according to one of the previous claims,
characterised in that
in the case of a comparison of the individual measurement points, a distinction is made between a winding disconnection, a group short circuit and an internal disruption due to the magnitude-dependent and time-dependent evaluation of the variation of the unbalanced current.

7. Method according to one of the previous claims,
characterised in that
the phase position of the measurement signal change with respect to the reference signal is determined each time the tolerance value or triggering value is exceeded, and the respective fault location is determined thereby.

8. Method according to claim 6,
characterised in that
the unbalanced measurement value corresponding to a group short circuit is temporarily and retrievably stored in a peak value memory.

9. Method according to one of the previous claims,
characterised in that
the triggering signal formed after exceeding tolerance values can be temporally delayed in a predeterminable manner.

**Revendications**

1. Procédé pour surveiller des installations à condensateurs dans des circuits en ponts ou en double étoile, dans lequel on détermine, on signalise et/ou on convertit en signal de coupure une coupure d'un enroulement ou un court-circuit de groupe, au moyen d'un convertisseur agencé dans une branche du pont ou entre des points de la double étoile, en fonction du dépassement d'une zone de tolérance prédéterminée par le signal de mesure de dissymétrie, caractérisé en ce que, en plus du signal de mesure de dissymétrie, on forme un signal de référence en relation avec une phase, en ce qu'on décompose le signal de mesure de dissymétrie respectif à l'aide du signal de référence et cycliquement au moins en signaux de mesure individuels attribués à des phases, et on détermine en valeur et en direction le courant partiel qui correspond au signal de mesure individuel, et on le compare à une valeur de tolérance individuelle associée respective.

2. Procédé selon la revendication 1, caractérisé en ce que le signal de mesure de dissymétrie respectif est décomposé à l'aide du signal de référence de façon cyclique en signaux de mesure individuels attribués par phase et par branche.

3. Procédé selon l'une ou l'autre des revendications 1 et 2, caractérisé en ce que les valeurs de mesure initiales provoquées par des dissymétries naturelles en raison de valeurs différentes de condensateurs, sont mémorisées en relation avec les phases, et sont utilisées pendant chaque cycle de mesure pour la correction du signal de mesure momentané en relation avec la phase, et ce qu'on prédétermine la même valeur de tolérance pour toutes les valeurs de mesure en relation avec les phases.

4. Procédé selon la revendication 3, caractérisé en ce que les valeurs de tolérance, ou valeurs de déclenchement, prédéterminées sont modifiées en fonction des oscillations de la tension nominale de l'installation de condensateur.

5. Procédé selon la revendication 4, caractérisé en ce que les valeurs de tolérance ou les valeurs de déclenchement sont respectivement multipliées avec les quotients du rapport entre le courant réel et le courant nominal établi.

6. Procédé selon l'une quelconque des revendications précédentes, caractérisé en ce que dans la comparaison des signaux de mesure individuels, on distingue entre une coupure d'enroulement, un court-circuit de groupe et une interruption interne, par évaluation en fonction de la valeur et en fonction du temps de la modification du courant de dissymétrie.

7. Procédé selon l'une quelconque des revendications précédentes, caractérisé en ce que lors de chaque dépassement de la valeur de tolérance ou de déclenchement, on détermine la situation en phase de la variation du signal de mesure vis-à-vis du signal de référence, et on détermine grâce à ceci le lieu de panne respectif.

8. Procédé selon la revendication 6, caractérisé en ce que la valeur de mesure de dissymétrie qui correspond à un court-circuit de groupe est stockée de façon intermédiaire dans une mémoire de valeurs de pointe, de façon à pouvoir être interrogée.

9. Procédé selon l'une quelconque des revendications précédentes, caractérisé en ce que le signal de déclenchement formé après dépassement de la valeur de tolérance peut être retardé dans le temps d'une manière prédéterminée.

# FIG.1

# FIG.2

# FIG . 3

FIG. 4